# EUROPEAN PATENT SPECIFICATION

(11) **EP 1 408 734 B1**
(45) Date of publication and mention of the grant of the patent: **20.09.2006**
(21) Application number: 02749430.1
(22) Date of filing: 16.07.2002
(51) Int. Cl.: A01G 9/22

(54) **INSECT SCREEN**
INSEKTENSCHUTZNETZ
ECRAN DE PROTECTION CONTRE LES INSECTES

(30) Priority: 16.07.2001 NL 1018556
(43) Date of publication of application: 21.04.2004
(73) Proprietor: Huisman Maasdijk Beheer B.V., 3155 DL Maasland (NL)
(72) Inventor: GROOTSCHOLTEN, Gerardus, Nicolaas, Maria, NL-2671 LP Naaldwijk (NL)
(74) Representative: Bruin, Cornelis Willem
(86) International application number: PCT/NL2002/000476
(87) International publication number: WO 2003/007695

(56) References cited:
- DE-A- 4 006 485
- DE-A- 19 952 481
- NL-A- 9 400 921
- NL-C- 1 012 518
- NL-C- 1 014 244

## Description

The invention relates to a greenhouse comprising at least two rows of posts which are mutually connected by transverse beams, at least one ventilating opening arranged in a greenhouse roof, and at least one screen device arranged substantially in one plane between two rows of posts and comprising:
- at least one screen which can be operated to an extended position and a packed position,
- at least one substantially horizontally placed guide means which engages on the screen, and
- drive means which engage with engaging means on at least one screen and which can move the screen between the two positions, wherein the screen device is arranged under the roof of the greenhouse so that extended screens can close off the greenhouse on the top side.

Such a greenhouse is generally known. In usual devices the screen has the function of saving energy, intercepting sunlight and/or blocking radiation of artificial light.

It is known to cover a ventilation opening of a greenhouse, which can be obtained by opening a ventilating panel, with an insect-excluding screen arranged along the edges of the panel.

It is noted that the use of an insect-excluding screen is known from DE 199 52 481, wherein the screen device is placed substantially horizontally under that part of the greenhouse roof provided with the ventilating opening. Arranging of the screen device for this screen involves modification of the greenhouse and considerable cost.

Such insect-excluding screens interfere with the ventilating capacity. The invention has for its object to provide a greenhouse provided with an insect-excluding screen device and having a higher ventilating capacity.

This object is achieved according to the invention by the device according to claim 1. The insect-excluding screen extends over a surface area between the posts and beams. This insect screen surface area in the greenhouse according to the invention is larger than in the known screen device. A greater ventilating capacity is hereby achieved. The screen can even be embodied with finer mesh so that smaller insects can be excluded without the total ventilating capacity being decreased.

The screen device combines two advantages not known from DE 199 52 481, that is, that use is made of existing screen devices which are substantially arranged in the plane between the posts, and increasing the ventilating surface, whereby it is possible to work with a finer mesh screen.

It is advantageous to arrange the screen device between two rows of posts of a greenhouse. When the rows of posts are mutually connected in the width by beams, (trusses or lattice girders), the screen device is enclosed by two beams and at least two rows of posts. The invention is based on the arranging of a screen over a much larger surface area than strictly necessary, thereby achieving improved performance.

In the preferred embodiment according to claim 2 or 3 the screen device comprises a second and/or a third screen and/or fourth screen. This screen preferably engages on the same substantially horizontally placed guide means as the air-permeable insect-excluding screen. The screens are then placed opposite each other. According to this embodiment only one at a time of the two screens can be placed in the extended position.

According to the invention an air-permeable insect-excluding screen is added to known, substantially horizontal guide means. The screen device can thus have the air-permeable insect-excluding screen added thereto at very low cost. This is achieved by having the air-permeable insect-excluding screen engage on the existing guide means and the like. Installation costs are thus saved.

It is favourable to provide the insect-excluding screen with coupling means. These coupling means engage on at least a second screen. The coupling means can for instance comprise: a hook, velcro tape, click-on means, a hooking profile or other connecting means. A double-action device is thus formed. When the second screen is packed, the insect-excluding screen is simultaneously extended. When the second screen is folded open, the insect-excluding screen is carried into the packed position. The drive means can engage the whole of two or three screens and move it integrally. When the coupling means between the screens do not mutually engage, the screens are uncoupled. In this manner it is possible for no screen at all to be in the extended state in the screen device. This is the case for instance in the dark and non-ventilated winter months.

In the preferred embodiment the engaging means of the drive means can be coupled to each screen arranged in the screen device. It is possible in this manner to move the screens independently of each other from the pushed-together position to the extended position in the screen device.

An air-permeable insect-excluding screen is per se known. According to the invention a screen with a finer mesh than usual is possible owing to the larger surface area covered. The insect-excluding screen can be embodied in a greenhouse subject to the crop growing in this greenhouse and the insects specifically harmful for the crop.

It is noted that it is known that one screen can perform a plurality of the said known functions. It is possible to place a number of guide means above each other in a screen device so that a number of screens can be opened simultaneously.

The direction of movement of the screens in the screen device is substantially horizontal. This can be from beam to beam as well as from gutter to gutter. The screen device can be applied in any type of greenhouse.

The invention will be further elucidated in the following description with reference to the annexed figures. Herein:
Figure 1A shows a partly cut-away view of a greenhouse with screen device according to a first embodiment of the invention.
Figure 1B shows a cross-sectional view of an embodiment of the coupling means in the screen device according to the invention.
Figure 2 shows a partly cut-away view of a screen device according to a second embodiment.

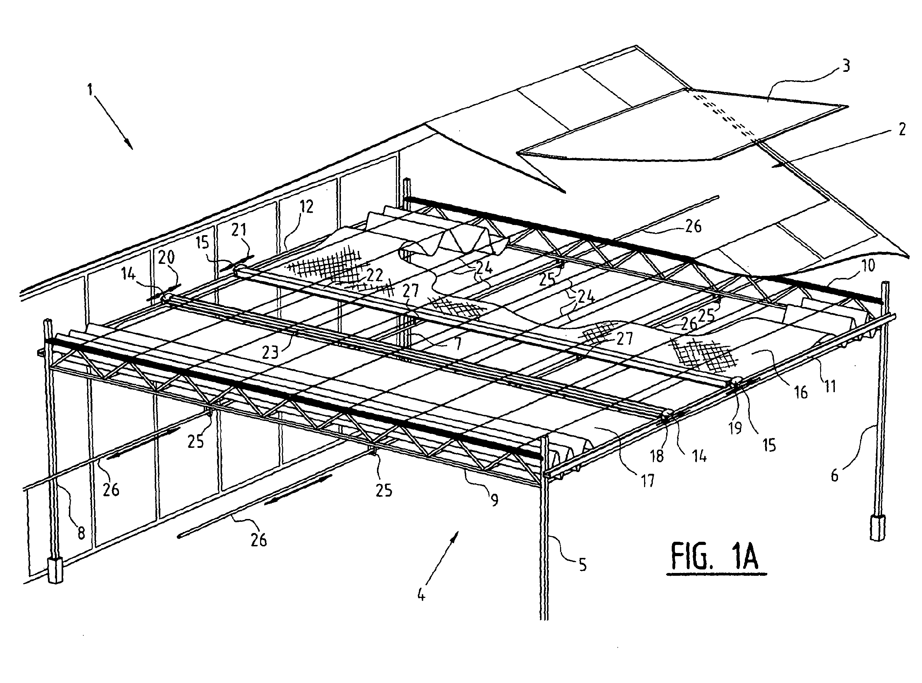

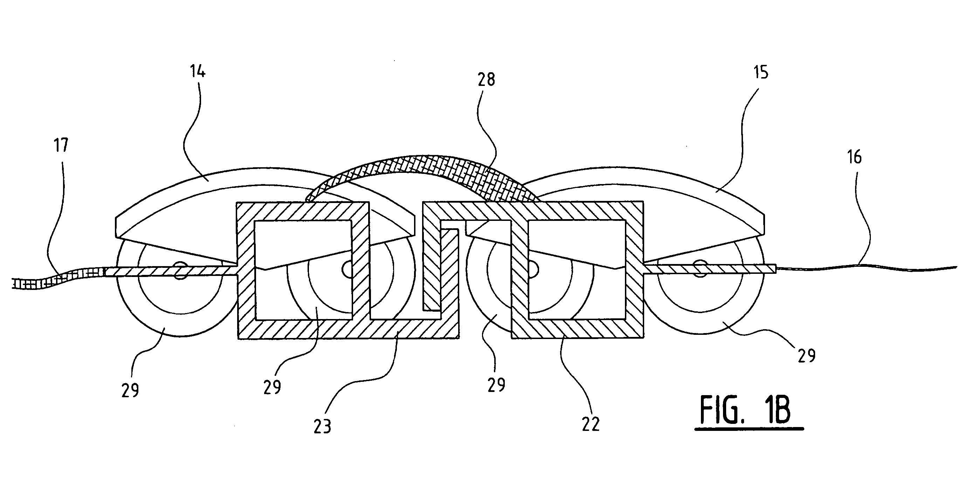

Figure 1 shows a perspective view of a partly cut-away greenhouse 1. The greenhouse comprises a ventilating opening 2 arranged in the roof and provided with a movable ventilating panel 3.

Screen device 4 is situated in greenhouse 1. The screen device engages on four posts 5-8. Posts 5 and 6 form part of a row of posts running in longitudinal direction of the greenhouse. Posts 5 and 6 of a first row of posts are connected to posts 8 and 7 of a second row of posts by means of beams 9 and 10. A guide track 11 and 12 is situated between the posts of a row of posts. Guide wheel elements 14 and 15 engaging on guide tracks 11 and 12 form together with guide tracks 11 and 12 the guide means of screens 16 and 17, so that screens 16 and 17 are movable between the pushed-together position and the extended position. The screens can be moved for this purpose according to arrows 18 and 20, respectively 19 and 21. In the figure both screens 16 and 17 are shown in a position which is a combination of the two extreme positions. Both ends of screens 16 and 17 close to posts 10 and 9 are in the partly pushed-together position.

Guide means 11, 12, 14 and 15 can be designed in many ways according to the prior art. It is simple for the skilled person to apply this known method for this purpose.

The drive means for moving between the positions is formed by an electric motor (not shown). This engages on rods 26 which are arranged over the longitudinal direction of greenhouse 1 running over the mounted guides 25 just below screens 16 and 17 of screen device 4. Rods 26 engage in this case on screen 16 with connecting pieces 27 such that this screen can be moved between the extended position and the pushed-together position. Engaging means 26, 27 of the drive means (not shown) can be designed in numerous ways according to the prior art. Here too the skilled person can apply diverse means in effective manner.

Screen 16 is an air-permeable insect-excluding screen. Screen 17 is a usual screen, such as an energy-saving screen, a sunlight-intercepting screen and/or a screen limiting artificial light radiation.

Insect-excluding screen 16 is provided with coupling means 22 which can engage on coupling means 23 of screen 17. In the figure the coupling means are not coupled. Under operation of the drive means (not shown) only screen 16 will now move as according to arrow 19 and 21.

When air-permeable insect-excluding screen 16 is coupled to screen 17, both screens will move as according to arrows 18-21, in the direction in which they are driven under the influence of the drive means (not shown). The one screen will extend from a pushed-together position, while conversely the other screen will be pushed together.

Coupling means 22 and 23 are formed in this embodiment by a profile 22 and 23 running over the entire length of both screens 16 and 17. The profiles can be coupled.

The screen device is further provided with guide wires 24. Screens 16 and 17 are situated between these guide wires 24, whereby a flapping movement of the screen is prevented in the extended position.

Placing of screen device 4 in greenhouse 1 is such that the greenhouse ground space and ventilating opening 2 are separated by screen 16/17.

It will be apparent that air-permeable insect-excluding screen 16 covers a much larger surface area in the embodiment according to the invention than the surface area when the insect-excluding screen is suspended in the opening 2 of panel 3 of greenhouse 1. It is hereby possible to use a much finer-mesh insect-excluding screen, since a larger ventilating surface area is used.

Figure 1B shows a cross-section of the profile of coupling means 22 and 23. The profiles are designed such that profile 22 hooks behind profile 23.

Also shown are the guide wheel elements 14 and 15. In this embodiment each element comprises two bearing-mounted wheels 29 which engage in guide track 11 and 12.

On the upper side of profile 22, which hooks behind profile 23 from above, is arranged a rubber flap 28. This flap 28 runs over the whole width of screen 16. Flap 28 ensures a close-fitting coupling between the profiles, so that the screen device is also insect-excluding at the coupling means.

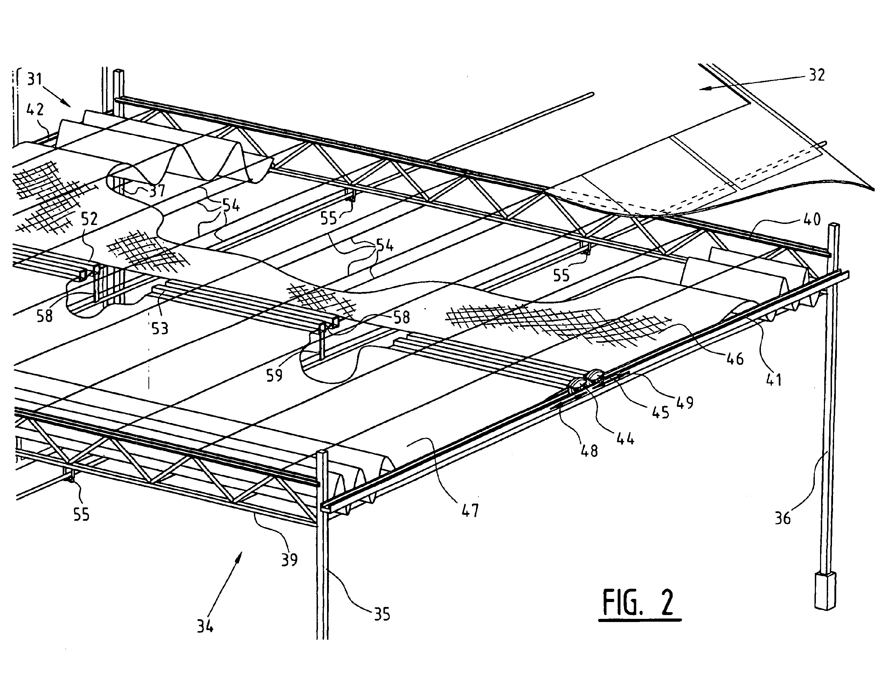

Figure 2 shows a second embodiment of the invention. Screen device 34 is arranged in the same manner between posts 35, 36 and 37 in a greenhouse 31 with a ventilating opening 32 in the greenhouse roof. Beams 39 and 40 are arranged between the rows of posts. Guide tracks 41 and 42 and guide wheel elements 44 and 45 form the guide means of air-permeable insect-excluding screen 46 and a usual screen 47, which are movable as according to arrows 48 and 49 between a pushed-together and extended position.

Screens 46 and 47 come together at the outer ends where profiles 52 and 53 are situated. No coupling means are arranged. A rubber flap 56 is arranged on one of the profiles such that the profiles, when moved toward each other, fit together in sufficiently close-fitting manner to exclude insects.

Screen 46 is connected to profile 52 which is connected to connecting piece 58, which in turn is connected to rod 56. Screen 47 is connected to profile 53 which is connected to connecting piece 59, which in turn is connected to rod 60. Rods 56 and 60 extend in longitudinal direction of the greenhouse 31, and engage on bearing-mounted guides 55. Rod 56 forms the engaging means of a first drive means (not shown). Rod 60 forms the engaging means of a second drive means (not shown).

When the first drive means moves rod 56 toward bottom left as according to arrow 48/49, both screens will move. Insect-excluding screen 46 will be carried into the extended position, while screen 47 is pushed-together. When the first drive means moves rod 56 toward top right, only screen 46 is pushed-together. The same is the case in corresponding manner for the second drive means, and so on. According to this embodiment no separate coupling means are necessary. It is also possible to have the driving carried out by one drive means.

## Claims

1. Greenhouse comprising at least two rows of posts which are mutually connected by transverse beams, at least one ventilating opening arranged in a greenhouse roof, and at least one screen device comprising:
- at least one air-permeable insect-excluding screen which can be operated to an extended position and a packed position,
- at least one substantially horizontally placed guide means which engages on the screen, and
- drive means which engage with engaging means on at least one screen and which can move the screen between the two positions, wherein the screen device is arranged under the roof of the greenhouse so that extended screens can close off the greenhouse in upward direction, **characterized in that** the screen device is arranged substantially in one plane with the beams between two rows of posts.

2. Greenhouse as claimed in claim 1, **characterized in that** the screen device also comprises at least a second screen which is movable by the drive means.

3. Greenhouse as claimed in claim 2, **characterized in that** at least the second screen can be guided by guide means of the first screen.

4. Greenhouse as claimed in claim 2 or 3, **characterized in that** the insect-excluding screen comprises coupling means for coupling to at least the second screen.

5. Greenhouse as claimed in any of the claims 2-4, **characterized in that** the engaging means of the drive means can be coupled releasably to at least two screens arranged in the screen device.

6. Greenhouse as claimed in any of the foregoing claims, **characterized in that** in the packed position the screen is arranged under a gutter in the greenhouse.

## Patentansprüche

1. Gewächshaus, umfassend zumindest zwei Reihen von Pfosten, welche gegenseitig durch Querbalken verbunden sind, zumindest eine in einem Gewächshausdach angeordnete Lüftungsöffnung und zumindest eine Abschirmungsvorrichtung, umfassend:
- zumindest eine luftdurchlässige, insektenundurchlässige Abschirmung, welche zu einer ausgefahrenen Position und einer gepackten Position gefahren werden kann,
- zumindest ein im Wesentlichen horizontal platziertes Führungsmittel, welches an der Abschirmung einrastet, und
- Antriebsmittel, die mit Einrastmitteln an zumindest einer Abschirmung einrasten und welche die Abschirmung zwischen den zwei Positionen bewegen können, wobei die Abschirmungsvorrichtung unter dem Dach des Gewächshauses derart angeordnet ist, dass die ausgefahrenen Abschirmungen das Gewächshaus nach oben hin abschließen können, **dadurch gekennzeichnet, dass** die Abschirmungsvorrichtung im Wesentlichen in einer Ebene mit den Balken zwischen zwei Reihen von Pfosten angeordnet ist.

2. Gewächshaus gemäß Anspruch 1, **dadurch gekennzeichnet, dass** die Abschirmungsvorrichtung auch zumindest eine zweite Abschirmung umfasst, welche durch die Antriebsmittel beweglich ist.

3. Gewächshaus gemäß Anspruch 2, **dadurch gekennzeichnet, dass** zumindest die zweite Abschirmung mit Führungsmitteln der ersten Abschirmung geführt werden kann.

4. Gewächshaus gemäß Anspruch 2 oder 3, **dadurch gekennzeichnet, dass** die insektenundurchlässige Abschirmung Kopplungsmittel zum Koppeln an zumindest die zweite Abschirmung umfasst.

5. Gewächshaus gemäß einem der Ansprüche 2-4, **dadurch gekennzeichnet, dass** die Einrastmittel der Antriebsmittel an zumindest zwei Abschirmungen lösbar koppelbar sind, welche in der Abschirmungsvorrichtung angeordnet sind.

6. Gewächshaus gemäß einem der vorhergehenden Ansprüche, **dadurch gekennzeichnet, dass** die Abschirmung in der gepackten Position unter einer Dachrinne im Gewächshaus angeordnet ist.

## Revendications

1. Serre comprenant au moins deux rangées de poteaux qui sont reliés mutuellement par des poutres transversales, au moins une ouverture de ventilation agencée dans un toit de la serre, et au moins un dispositif écran comprenant :
- au moins un écran anti-insectes perméable à l'air qui peut être actionné dans une position étendue et une position repliée,
- au moins des moyens de guidage placés sensiblement horizontalement qui viennent en prise avec l'écran, et
- des moyens d'entraînement qui viennent en prise avec les moyens de mise en prise sur au moins un écran et qui peuvent déplacer l'écran entre les deux positions, dans lequel le dispositif écran est agencé sous le toit de la serre de sorte que des écrans étendus puissent fermer la serre dans une direction verticale, **caractérisée en ce que** le dispositif écran est agencé sensiblement sur un plan avec les poutres entre deux rangées de poteaux.

2. Serre selon la revendication 1, **caractérisée en ce que** le dispositif écran comprend également au moins un second écran qui est mobile par les moyens d'entraînement.

3. Serre selon la revendication 2, **caractérisée en ce qu'**au moins le second écran peut être guidé par les moyens de guidage du premier écran.

4. Serre selon la revendication 2 ou 3, **caractérisée en ce que** l'écran anti-insectes comprend des moyens d'accouplement à accoupler au moins au second écran.

5. Serre selon l'une quelconque des revendications 2 à 4, **caractérisée en ce que** les moyens de mise en prise des moyens d'entraînement peuvent être accouplés de manière détachable à au moins deux écrans agencés dans le dispositif écran.

6. Serre selon l'une quelconque des revendications précédentes, **caractérisée en ce que** dans la position repliée, l'écran est agencé sous une gouttière dans la serre.
